# EUROPÄISCHE PATENTSCHRIFT

(11) **EP 3 064 334 B1**
(45) Veröffentlichungstag und Bekanntmachung des Hinweises auf die Patenterteilung: **02.08.2017**
(21) Anmeldenummer: 16000455.2
(22) Anmeldetag: 25.02.2016
(51) Int. Cl.: B29C 49/64, B29C 49/42, B29C 49/02, B29C 49/06, B29C 49/12, B29C 49/36, B29K 67/00, B29L 31/00, B29D 22/00

(54) **VERFAHREN UND AUFHEIZVORRICHTUNG ZUR TEMPERATURKONDITIONIERUNG VON VORFORMLINGEN SOWIE BLASFORMUNGSMASCHINE MIT EINER SOLCHEN VORRICHTUNG**
METHOD AND HEATING DEVICE FOR TEMPERATURE CONDITIONING OF PREFORMS AND BLOW MOLDING MACHINE WITH SUCH A DEVICE
PROCÉDÉ ET DISPOSITIF DE CHAUFFAGE DESTINÉ À DÉTERMINER LA TEMPÉRATURE D'ÉBAUCHES ET MACHINE DE MOULAGE PAR SOUFFLAGE COMPRENANT UN TEL DISPOSITIF

(30) Priorität: 05.03.2015 DE 102015002755
(43) Veröffentlichungstag der Anmeldung: 07.09.2016
(73) Patentinhaber: KHS Corpoplast GmbH, 22145 Hamburg (DE)
(72) Erfinder: Lewin, Frank, 22889 Tangstedt (DE); Ulutürk, Deniz, 22765 Hamburg (DE); Meyer, Niels, 22869 Schenefeld (DE)
(74) Vertreter: Hausfeld, Norbert

(56) Entgegenhaltungen:
- DE-A1-102012 001 229
- US-A- 4 147 487
- US-A1- 2011 256 493
- US-A1- 2014 161 924

## Beschreibung

Die Erfindung betrifft ein Verfahren zur Temperaturkonditionierung von aus einem thermoplastischen Material bestehenden Vorformlingen auf eine für eine Blasumformung geeignete Temperatur und Temperaturverteilung. Diese Temperaturkonditionierung erfolgt in einer Aufheizvorrichtung, welche mehrere Heizeinrichtungen aufweist. Die Aufheizvorrichtung, oft auch als Ofen bezeichnet, kann und ist in der Regel z.B. Bestandteil einer Blasumformungsmaschine bzw. Blasmaschine. Weiterhin weist diese Aufheizvorrichtung mehrere Transport- und Handhabungsmittel für den Transport und die Handhabung der Vorformlinge durch die Aufheizvorrichtung auf. Der Transport erfolgt entlang eines Transportweges innerhalb der Aufheizvorrichtung. Die Transport- und Handhabungsmittel sind kettenartig verbunden und auf einer umlaufenden Kettenbahn geführt. Diese Kettenbahn gibt somit auch den Transportweg vor. Solche Transport- und Handhabungsmittel können zum Beispiel als Transportdorne ausgebildet sein, die in vielfältiger Bauart im Stand der Technik bekannt sind. Entlang einer Heizstrecke, die Teil des genannten Transportweges der Vorformlinge durch die Aufheizvorrichtung ist, sind mehrere Heizeinrichtungen in Transportrichtung hintereinanderliegend stationär angeordnet. Diese Heizeinrichtungen können zum Beispiel Heizkästen nach dem Stand der Technik sein. Auf wenigstens einer den Heizeinrichtungen gegenüberliegenden Seite sind Reflektoren vorgesehen. Zusätzlich können Bodenreflektoren oder den Mündungsabschnitt der Vorformlinge schützende Kopfreflektoren vorgesehen sein. Die genannten Reflektoren bilden im Bereich der Heizeinrichtungen mit diesen zusammen einen tunnelartigen Heizbereich, durch den hindurch die Vorformlinge zum Zwecke der Aufheizung transportiert werden. Wenigstens im Bereich der genannten Heizstrecke ist jedem Vorformling bzw. jedem Transport- und Handhabungsmittel ein mitlaufender Reflektor zugeordnet, der mit dem Vorformling mitlaufend durch die Heizstrecke hindurch bewegt wird.

Weiterhin betrifft die Erfindung eine Aufheizvorrichtung mit mehreren Heizeinrichtungen zur Temperaturkonditionierung von aus einem thermoplastischen Material bestehenden Vorformlingen auf eine für eine Blasumformung geeignete Temperatur und Temperaturverteilung. Die Aufheizvorrichtung weist Transport- und Handhabungsmittel für den Transport und die Handhabung der Vorformlinge durch die Aufheizvorrichtung entlang eines Transportweges auf. Dabei sind die Transport- und Handhabungsmittel kettenartig miteinander verbunden und auf einer umlaufenden Kettenbahn geführt. Diese umlaufende Kettenbahn gibt den Transportweg der Vorformlinge durch die Aufheizvorrichtung vor. Entlang einer Heizstrecke, die Teil des Transportweges der Vorformlinge durch die Aufheizvorrichtung ist, sind mehrere Heizeinrichtungen in Transportrichtung hintereinanderliegend stationär angeordnet. Auf wenigstens einer den Heizeinrichtungen gegenüberliegenden Seite sind Reflektoren angeordnet, die im Bereich der Heizeinrichtungen mit diesen zusammen einen tunnelartigen Heizbereich ausbilden, durch den hindurch die Vorformlinge zum Zwecke der Aufheizung transportiert werden. Wenigstens im Bereich der Heizstrecke ist jedem Vorformling bzw. jedem Transport- und Handhabungsmittel ein mitlaufender Reflektor zugeordnet, der mit dem Vorformling durch die Heizstrecke mitlaufend ausgeführt ist.

Schließlich betrifft die Erfindung eine Blasformungsmaschine, auch Blasmaschine genannt, mit Blasstationen zur Blasumformung von Vorformlingen in Behälter mit einer wie vorstehend definierten Aufheizvorrichtung.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine, also innerhalb einer Vorrichtung zur blasumformenden Herstellung von Behältern aus Vorformlingen, unterschiedlichen Bearbeitungsstationen zugeführt. Typischerweise weist eine derartige Blasformungsmaschine bzw. Blasmaschine eine Aufheizvorrichtung sowie eine Blaseinrichtung auf, in deren Bereich der zuvor in der Aufheizvorrichtung temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasumformvorganges bzw. Blasvorganges. Es sind auch andere Fluide zur Blasformung bekannt, insbesondere auch die Verwendung des in den Behälter abzufüllenden Füllgutes als Blasfluid. Die nachfolgende allgemeine Beschreibung erfolgt gleichwohl am Beispiel einer mit Druckgas arbeitenden Blasmaschine, ohne dass sich die Erfindung auf solche Blasmaschinen beschränkt.

Der grundsätzliche Aufbau einer Blasstation zur Behälterformung wird in der DE-OS 42 12 583 beschrieben. Möglichkeiten zur Temperaturkonditionierung der Vorformlinge werden in der DE-OS 23 52 926 erläutert. Auf die genannten Schriften wird explizit Bezug genommen und insofern erübrigt sich eine weitere Beschreibung zu Blasstationen und zur Temperaturkonditionierung.

Innerhalb der Vorrichtung zur Blasformung können die Vorformlinge sowie die geblasenen Behälter mit Hilfe unterschiedlicher Transport- und Handhabungseinrichtungen transportiert werden. Bekannt ist z.B. die Verwendung von Transportdornen, auf die die Vorformlinge aufgesteckt werden. Die Vorformlinge können aber auch mit anderen Trageinrichtungen gehandhabt und transportiert werden. Die Verwendung von Greifzangen zur Handhabung und zum Transport von Vorformlingen und die Verwendung von Klemmdornen, die zur Halterung in einen Mündungsbereich des Vorformlings einführbar sind, gehören ebenfalls zu den verfügbaren Konstruktionen.

Ein Transport und eine Handhabung von Behältern und Vorformlingen unter Verwendung von Übergaberädern wird beispielsweise in der DE-OS 199 06 438 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, nämlich auf einem sogenannten Blasrad, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Aufheizvorrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen. Aus dem Stand der Technik sind sowohl aktive, steuerbare als auch passive Klemmelemente bekannt. Passive Klemmelemente bewirken z.B. eine Klemmung aufgrund einer einwirkenden Federkraft, gegen die der Vorformling auf die Transportdorne aufgesteckt werden oder gegen die die Vorformlinge vom Transportdorn abgenommen werden, während bei den aktiven Transportdornen eine Betätigung erfolgen muss, z.B. aktorisch oder z.B. durch eine externe Kurvensteuerung, die den Klemmmechanismus auslöst bzw. den Klemmeingriff wieder aufhebt.

Zur Verkürzung der erforderlichen Aufheizzeit ist es bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Die Aufheizung der Vorformlinge erfolgt dabei primär durch Strahlungsabsorption beim Durchgang der NIR-Strahlung durch das Vorformlingsmaterial. Zur Optimierung der Energieausbeute werden derartige Heizstrecken mit einer Vielzahl von Spiegelflächen ausgestattet, um eine Absorption der Wärmestrahlung durch Bauteile der Heizstrecke möglichst zu vermeiden oder zumindest stark zu reduzieren, und um die NIR-Strahlung erneut zum Heizen auf den Vorformling zu reflektieren.

Typischerweise werden die Heizstrecken zumindest bereichsweise tunnelartig ausgebildet, und sie sind dazu z.B. auf der einen Seite vom mit reflektierenden Eigenschaften ausgestatteten Gehäuse einer Halterung für die Heizelemente sowie auf der gegenüberliegenden Seite von einem diesem Gehäuse gegenüberliegenden Reflektor begrenzt. In vertikaler Richtung kann eine Begrenzung durch einen Boden und/oder einen Deckel erfolgen, je nachdem, ob die Vorformlinge mit ihren Mündungen in lotrechter Richtung nach oben oder nach unten orientiert durch die Heizstrecke hindurch transportiert werden. Auch diese vertikalen Begrenzungen können als Reflektoren ausgebildet werden. Es ist zudem üblich, den Mündungsbereich des Vorformlings z.B. mittels mitlaufender Reflektoren gegen erwärmende Strahlung zu schützen, da dieser Bereich bereits fertig ausgeprägt hergestellt ist und bei der Blasformung keine weitere Verformung erfahren soll. Beispiele für diesen Stand der Technik sind die US 2014/0161924 A1, die DE 10 2012 001 229 A1 und die US 2011/0256493 A1.

Es sind im Stand der Technik allerdings nicht nur den Heizelementen gegenüberliegend stationär angeordnete Reflektoren bekannt, die nachfolgend als Gegenreflektoren bezeichnet werden sollen, z.B. zur Abgrenzung gegenüber Boden- oder Kopfreflektoren, sondern auch mit dem Vorformling mitlaufende Gegenreflektoren. So zeigt z.B. das Patent US 4,147,487 eine Aufheizvorrichtung mit Transport- und Handhabungsmitteln in Form eines Transportdornes. Halbzylindrisch gewölbte Gegenreflektoren sind auf der heizelementabgewandten Seite des Vorformlinges angeordnet. Diese Gegenreflektoren werden von dem gleichen Transportmechanismus bewegt, wie die Dorne, auf denen die Vorformlinge aufgesteckt sind.

Auch die DE 10 2012 025 207 A1 zeigt mit den Vorformlingen mitlaufende Gegenreflektoren. Dort sind die Gegenreflektoren an der Handhabungseinrichtung angeordnet und wandern mit der Handhabungseinrichtung entlang des Transportweges des Vorformlinges.

Es wird als nachteilig bei diesem Stand der Technik angesehen, dass bei diesen Konstruktionen des Standes der Technik eine Austauschbarkeit der Gegenreflektoren z.B. zur Anpassung an eine andere Geometrie der Vorformlinge bei einem Wechsel der herzustellenden Behälter nicht oder nur mit großem Aufwand möglich ist. Wünschenswert wäre aber, dass die Gegenreflektoren formangepasst an die Vorformlinge ausgebildet sind. Dafür ist erforderlich, bei Wechsel des Vorformlingtyps auch die Gegenreflektoren auswechseln zu können. Weiterhin wird als nachteilig angesehen, dass jedem Transportelement bzw. Handhabungselement ein Gegenreflektor zugeordnet ist, obwohl immer nur ein Teil dieser Transportmittel tatsächlich im Bereich der Heizstrecke angeordnet ist. Schließlich wird als nachteilig angesehen, dass die mitlaufenden Gegenreflektoren des Standes der Technik im Einlaufbereich der Vorformlinge in die Aufheizvorrichtung, also insbesondere beim Einführen eines Transportdornes in den Vorformling, hinderlich sind. Dies gilt in analoger Weise bei der Entnahme des Vorformlinges aus der Aufheizvorrichtung. Auch hier ist nach dem Stand der Technik der Gegenreflektor so anzuordnen und auszubilden, dass Vorformling und Transportdorn in Eingriff gebracht bzw. getrennt werden können. Entsprechend groß ist der Abstand zwischen Vorformling und Gegenreflektor zu dimensionieren.

Die Aufgabe der vorliegenden Erfindung besteht darin, die genannten Nachteile zu beseitigen und Verfahren und Vorrichtungen bereit zu stellen, mit denen bei mit den Vorformlingen mitlaufenden Gegenreflektoren die genannten Nachteile beseitigt sind.

Diese Aufgabe wird gelöst mit einem Verfahren gemäß den Merkmalen des Anspruchs 1, durch eine Aufheizvorrichtung mit den Merkmalen des Anspruchs 7 sowie mit einer Blasformungsmaschine mit den Merkmalen des Anspruchs 12.

Weitere vorteilhafte Ausgestaltungen sind Gegenstand der Unteransprüche oder ergeben sich aus vorteilhaften Weiterbildungen, die in der Figurenbeschreibung angegeben sind.

Erfindungsgemäß ist vorgesehen, dass die Gegenreflektoren auf einer Reflektorbahn geführt werden, die unabhängig und getrennt ist von der Kettenbahn, auf der die kettenartig verbundenen Transport- und Handhabungsmittel umlaufen. Die Reflektorbahn verläuft im Bereich der Heizstrecke parallel und in einem ersten Abstand zur Kettenbahn. In diesem Bereich soll der Reflektor seine Funktion erfüllen und sollte daher in einem geeigneten Abstand mit dem Vorformling mitlaufen. Dies wird mit einer Parallelführung von Kettenbahn und Reflektorbahn erreicht. Der Abstand zwischen den beiden Bahnen wird bevorzugt in diesem Bereich im Wesentlichen gleichbleibend ausgeführt werden. Mit Vorteil nimmt die Reflektorbahn in wenigstens einem Bereich außerhalb der Heizstrecke einen von der Kettenbahn abweichenden Bahnverlauf, das heißt der für die Heizstrecke vorgesehene gemeinsame Parallelverlauf zwischen Kettenbahn und Reflektorbahn ist dort aufgehoben. Bevorzugt hat in diesem Bereich die Reflektorbahn einen größeren Abstand zur Kettenbahn als im Bereich der Heizstrecke, um z.B. den Zugang zu den Reflektoren zu erleichtern oder aber auch die Streckenlänge der Reflektorbahn kürzer als die der Kettenbahn auszuführen.

Die Gegenreflektoren werden lediglich im Bereich der Heizstrecke benötigt und insofern ist erfindungsgemäß vorgesehen, dass für das gemeinsame Durchlaufen der Heizstrecke eine Bewegungskopplung zwischen einem Gegenreflektor und einem zu beheizenden Vorformling erfolgt. Diese Bewegungskopplung erfolgt z.B. durch Kopplung des Gegenreflektors an das den Vorformling tragende Transport- und Handhabungsmittel. Dazu sind an den zu koppelnden Kopplungspartnern z.B. geeignete Kopplungsmittel vorgesehen. Weiterhin ist erfindungsgemäß vorgesehen, dass die besagte Bewegungskopplung spätestens in einem Bereich außerhalb der Heizstrecke wieder aufgehoben wird. Auf diese Weise können der Vorformling und der in der Heizstrecke zugeordnete Gegenreflektor zumindest auf einem Teilweg außerhalb der Heizstrecke bewegungsentkoppelt geführt werden. Letzteres ermöglicht es, die Reflektorbahn einen anderen Verlauf nehmen zu lassen als die Kettenbahn. Die Reflektorbahn kann insbesondere erheblich kürzer ausgebildet werden, so dass z.B. die Zahl der benötigten Gegenreflektoren verringert werden kann. Insbesondere ist es möglich, die Reflektorbahn in bestimmten Bereichen des Transportweges des Vorformlinges mit einer größeren Entfernung von der Kettenbahn zu führen, als z.B. im Bereich der Heizstrecke, wo Vorformling und Gegenreflektor nahe zueinander und synchron geführt werden sollten, so dass in solchen Bereichen außerhalb der Heizstrecke die Gegenreflektoren vom Vorformling weiter beabstandet sein können, so dass ein freier Zugang zu den Vorformlingen ermöglicht ist, z.B. für das Aufstecken der Vorformlinge auf Transportdorne oder das Abnehmen der temperierten Vorformlinge von Transportdornen. Gleichzeitig besteht in diesen Bereichen außerhalb der Heizstrecke die Möglichkeit, freieren Zugang zu den Gegenreflektoren zu ermöglichen, um diese z.B. gegen andere formangepasste Gegenreflektoren auszutauschen, wenn z.B. auf einen anderen Vorformlingstyp umgestellt wird. Der Abstand zwischen Kettenbahn und Reflektorbahn kann z.B. im Bereich außerhalb der Heizstrecke so groß gewählt werden, dass eine Bedienperson freien Zugang zu den Reflektoren erhalten kann, um diese auszutauschen. Geeignete Zugangsbereiche wären insbesondere die Bereiche, in denen die Umlenkräder der Kettenbahn angeordnet sind.

Grundsätzlich ist es möglich, die Gegenreflektoren auf der Reflektorbahn mit einem eigenen Antrieb zu versehen. Denkbar sind z.B. motorische Antriebe oder auch die Gegenreflektoren kettenartig aneinanderzureihen und die Kette anzutreiben, analog zu der Kettenbahn, die die Transport- und Handhabungsmittel umlaufend bewegt. Eine konstruktiv einfachere Alternative ist z.B., dass die Gegenreflektoren ohne Kopplung aneinander und eng benachbart auf der Reflektorbahn angeordnet sind. Ein vorwärtsbewegter Gegenreflektor schiebt dann den benachbarten Gegenreflektor an, so dass insgesamt die Gegenreflektoren auf der Reflektorbahn umlaufen, ohne dass dafür viele Antriebsmittel vorzusehen sind. Allerdings ist dann eine Synchronisierung zwischen der Bewegung der Gegenreflektoren und der Bewegung der Vorformlinge erforderlich. Vorteilhafter und konstruktiv einfacher ist es, eine Kopplung der Gegenreflektoren im Bereich der Heizstrecke mit den auf der Kettenbahn umlaufenden und angetriebenen Transport- und Handhabungsmitteln vorzunehmen. Der ohnehin vorhandene Antrieb der Transport- und Handhabungsmittel führt dann auch zu einem Vorwärtsbewegen der Gegenreflektoren. Eine Bewegungssynchronisierung ist infolge der Kopplung ebenfalls automatisch erreicht. Insbesondere entfällt die Notwendigkeit einen eigenen Antrieb für die Gegenreflektoren vorzusehen. Dies ist auch im Hinblick auf die Umrüstung bestehender Blasmaschinen und bestehender Aufheizvorrichtungen von Vorteil und erleichtert den Austausch der Gegenreflektoren, da z.B. keine Koppelverbindungen zu Antriebsmitteln gelöst werden müssen.

Mit Vorteil ist die Reflektorbahn dabei als Führungsschiene ausgebildet, in die die Gegenreflektoren ein- und ausgehängt werden können. Die Gegenreflektoren weisen dazu z.B. Laufrollen zum Abrollen auf der Führungsschiene auf. Dadurch ist eine reibungsarme Bewegung der Gegenreflektoren auf der Führungsschiene gewährleistet und die Gegenreflektoren lassen sich auf einfache Weise ein- und aushängen, z.B. um gegen an andere Vorformlingstypen angepasste Gegenreflektoren ausgetauscht zu werden.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Haltevorrichtung aus dem Stand der Technik,
- Fig. 6: einen Vertikalschnitt gemäß Schnittlinie VI in Fig. 5,
- Fig. 7: eine Aufsicht auf den Umlenkbereich einer erfindungsgemäßen Aufheizvorrichtung mit auf einer Reflektorbahn geführten Gegenreflektoren,
- Fig. 8: einen Längsschnitt durch eine Heizeinrichtung, einen Transportdorn und einen Gegenreflektor im Bereich der bewegungsgekoppelt durchlaufenen Heizstrecke.

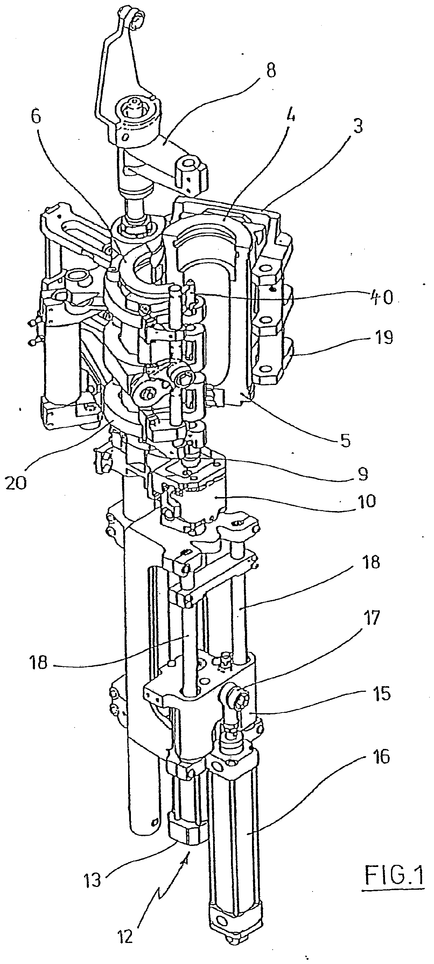

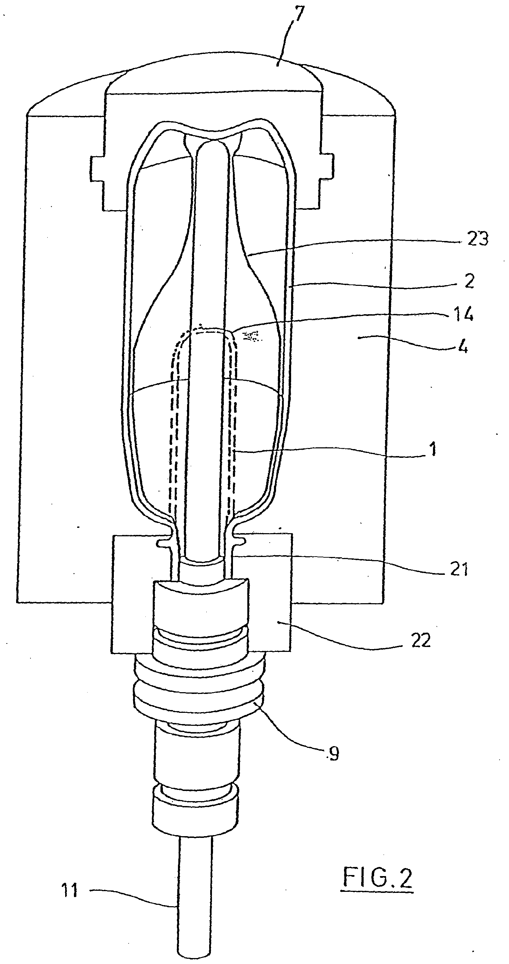

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Halteelement (9) fixiert sein. Dieses Halteelement (9) kann z.B. erfindungsgemäß oder wie im Stand der Technik bekannt ausgebildet sein. Es ist beispielsweise möglich, den Vorformling (1) über Zangen oder andere Handhabungsmittel direkt in die Blasform (4) einzusetzen. Zur Ermöglichung einer Druckluftzuleitung ist unterhalb der Blasform (4) ein Anschlusskolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn mehrere Blasstationen (3) auf einem rotierenden Blasrad (25) angeordnet sind.

Bei der in Fig. 1 dargestellten Ausführungsform ist das Recksystem derart ausgebildet, dass eine Tandemanordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40). Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Fertigbehälter (2) auch gestrichelt eingezeichnet den Vorformling (1) und schematisch eine sich entwickelnde Behälterblase (23).

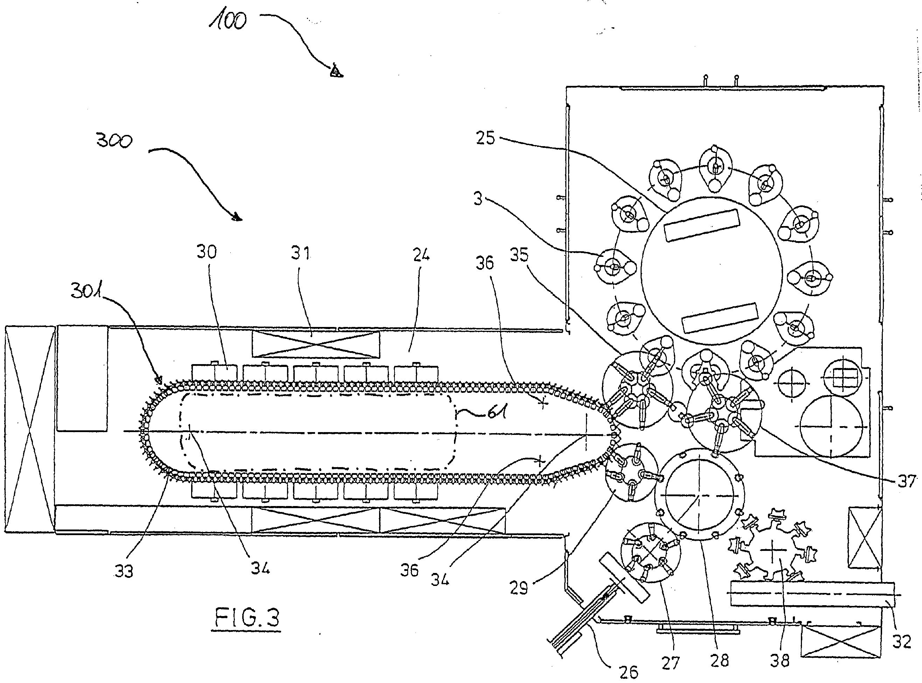

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) als Heizeinrichtungen sowie Gebläse (31) angeordnet, um die Vorformlinge (1) zu temperieren. Vorliegend besteht die Heizstrecke (24) aus zwei Teilstrecken, die von einem Umlenkbereich bei Umlenkrad (34) voneinander getrennt sind. Nach einer ausreichenden Temperierung der Vorformlinge (1) werden diese von einem Übergaberad (35) an das Blasrad (25) übergeben, in dessen Bereich die Blasstationen (3) angeordnet sind. Die fertig geblasenen Behälter (2) werden von weiteren Übergaberädern (37, 28, 38) einer Ausgabestrecke (32) zugeführt. Das Übergaberad (37) ist dabei als ein Entnahmerad und das Übergaberad (38) als ein Ausgaberad ausgebildet.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) Teil des Transportweges der Vorformlinge (1) ist. Der Transport der Vorformlinge (1) erfolgt in der Aufheizvorrichtung (300) mittels einer Vielzahl umlaufender Transportelemente (33), die kettenartig aneinandergereiht und entlang von Umlenkrädern (34, 36) geführt sind. Die umlaufenden Transportelemente (33) bewegen sich also entlang einer Kettenbahn (301), die auch die Transportbahn der Vorformlinge bildet, da die Vorformlinge (1) entlang der Kettenbahn (301) geführt sind. Insbesondere ist daran gedacht, durch die kettenartige Anordnung der Transportelemente (33) eine im Wesentlichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung des Transportweges (301) drei Umlenkräder (34, 36) positioniert sind, und zwar jeweils die kleineren Umlenkräder (36) im Bereich der Überleitung zu den linearen Verläufen des Transportweges (301) und das größere Umlenkrad (34) im unmittelbaren Übergabebereich zum Übergaberad (27) und zum Blasrad (25). Alternativ zur Verwendung von kettenartigen Transportelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

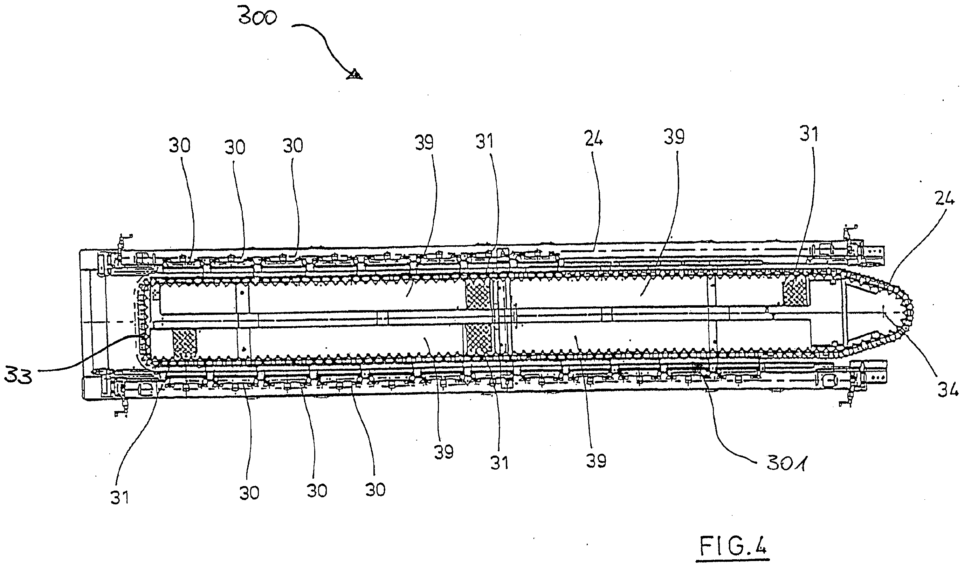

In der in Fig. 4 dargestellten modifizierten Aufheizvorrichtung (300) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge (1) realisiert. Die Kühlluftkanäle (39) können im Bereich von den Heizstrahlern (30) gegenüberliegenden Oberflächen Gegenreflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine (100) kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht. Gemäß einer dritten Ausführungsvariante durchläuft der Vorformling den gesamten Bereich der Blasmaschine (100) ohne Durchführung von Wendevorgängen mit seiner Mündung in lotrechter Richtung nach oben orientiert.

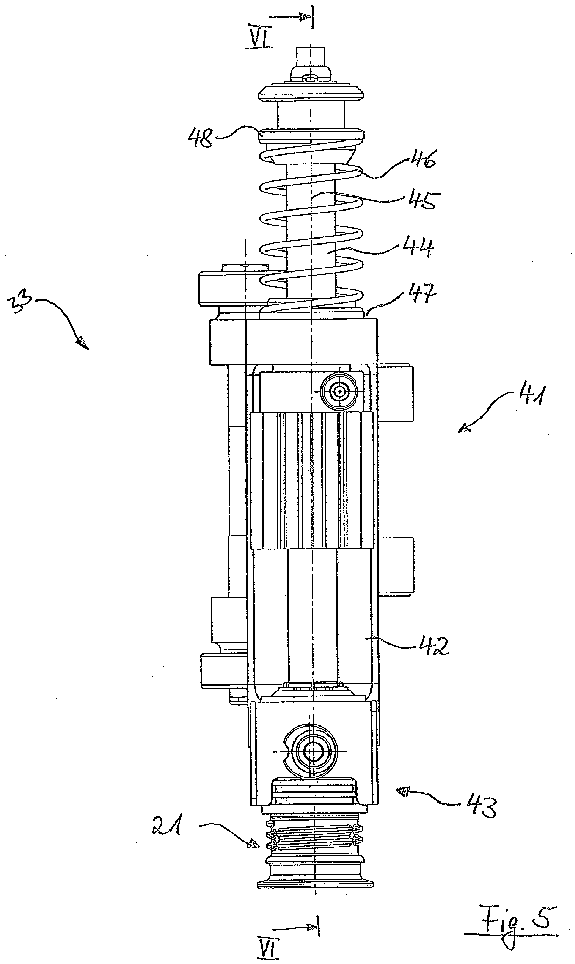

Fig. 5 zeigt eine teilweise Darstellung einer Seitenansicht eines Vorformlings (1), in dessen Mündungsabschnitt (21) bereichsweise eine aus dem Stand der Technik bekannte Haltevorrichtung (41) eingeführt ist. Diese Haltevorrichtung (41) ist ein Beispiel für ein Transportelement (33), das in den Figuren 3 und 4 schematisch gezeigt ist.

Die beispielhaft gezeigte Haltevorrichtung (41) weist eine Elementbasis (42), einen dem Vorformling (1) zugewandten Kopf (43) sowie einen mit dem Kopf (43) verbundenen Schaft (44) auf. Der Schaft (44) mit dem Kopf (43) ist relativ zur Elementbasis (42) in Richtung einer Elementlängsachse (45) beweglich. Eine Grundposition des Schaftes (44) relativ zur Elementbasis (42) kann von einer Feder (46) vorgegeben werden. Die Feder (46) ist beim dargestellten Ausführungsbeispiel zwischen einer Oberseite (47) der Elementbasis (42) und einem seitlich über den Schaft (44) überstehenden Endsegment (48) angeordnet.

Gemäß einem typischen Ausführungsbeispiel können eine Mehrzahl von Elementbasen (42) kettenartig miteinander verbunden werden oder mit einer umlaufenden Transportkette verbunden werden. Es ergibt sich dadurch eine Anordnung, wie sie in den Figuren 3 und 4 gezeigt ist. Die Haltevorrichtung (41) kann aber auch an umlaufenden Übergaberädern oder sonstigen Einrichtungen angebracht sein. Ebenfalls erfolgt gemäß einem typischen Ausführungsbeispiel eine Positionierung des Schaftes (44) relativ zur Elementbasis (42) kurvengesteuert über eine Kurve, die sich zumindest abschnittweise entlang eines Transportweges des Tragelementes (41) erstreckt.

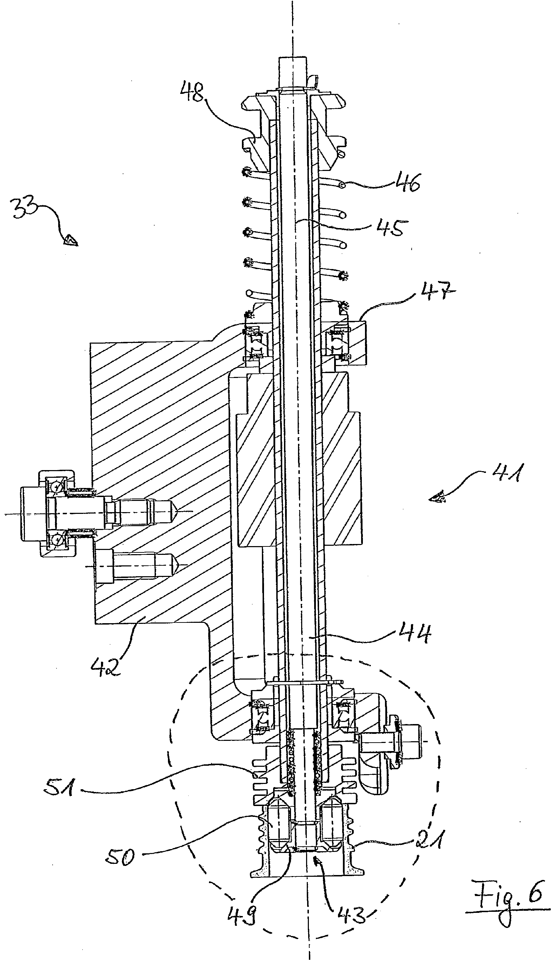

Fig. 6 zeigt in einem Längsschnitt die Positionierung des Kopfes (43) innerhalb eines Mündungsabschnittes (21) eines Vorformlings (1) oder eines Behälters (2). Es ist zu erkennen, dass der Kopf (43) Vertiefungen (49) aufweist, in denen Klemmelemente (50) angeordnet sind. Außerhalb des in den Mündungsabschnitt (21) einführbaren Bereiches kann der Kopf (43) einen Kühlkörper (51) aufweisen, der mit Kühlrippen zur Wärmeabstrahlung versehen ist.

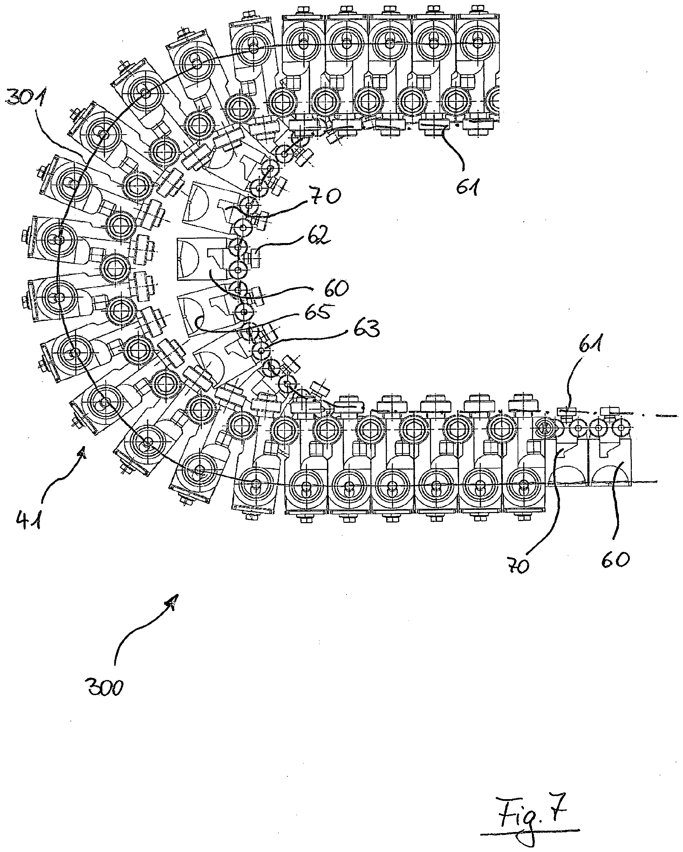

Fig. 7 zeigt in einer Aufsicht die kettenartig verbundenen umlaufenden Haltevorrichtungen (41) bzw. Transportelemente (33) im Bereich der Umlenkung, also z.B. im Bereich des Umlenkrades (34) der Figur 3. Die in Fig. 3 gezeigten Heizstrahler (30) sind hier aus Gründen der Übersichtlichkeit weggelassen. Allerdings sind gegenüber der Fig. 3 nunmehr zusätzlich die auf einer Reflektorbahn (61) umlaufenden Gegenreflektoren (60) dargestellt. Die Reflektorbahn (61) selber kann z.B. als übliche Führungsschiene bzw. Laufschiene ausgebildet sein und ist aus Darstellungsgründen nicht gezeigt, um den Blick von oben auf die Reflektoren (60) nicht zu versperren. Sie ist lediglich als strichpunktierte Linie dargestellt, um insbesondere den Verlauf relativ zu Kettenbahn (301) zu verdeutlichen. Die gleiche strichpunktierte Linie ist auch in Fig. 3 zu sehen. Sie verdeutlicht, dass im Bereich der Heizstrecke (24) die Reflektorbahn (61) parallel und äquidistant zur Kettenbahn (301) verläuft und dass dort der Abstand gering ist, damit der Gegenreflektor (60) nahe zum Vorformling (1) geführt ist. In den Bereichen außerhalb der Heizstrecke (24), insbesondere in den Umlenkbereichen der Kettenbahn (301), nimmt die Reflektorbahn (61) einen ganz anderen Verlauf weiter entfernt von der Kettenbahn.

In der Aufsicht der Figur 7 sind im Umlenkbereich der Kettenbahn (301) auch die Koppelelemente (70) der Gegenreflektoren (60) erkennbar, die im gezeigten Ausführungsbeispiel als Mitnehmerkörper ausgebildet sind, die bei Erreichen eines entsprechenden Abstandes der Ketten- und der Reflektorbahn mit Anlageflächen der Transportmittel (33) zur Anlage kommen und von den bewegten Transportmitteln (33) mitgenommen werden. Diese Annäherung von Reflektor- und Kettenbahn ist bei Verfolgen der Relativpositionen der Transportmittel (33) und der Gegenreflektoren (60) in Richtung der im Uhrzeigersinn erfolgenden Bewegung der Vorformlinge (1) gut nachzuvollziehen.

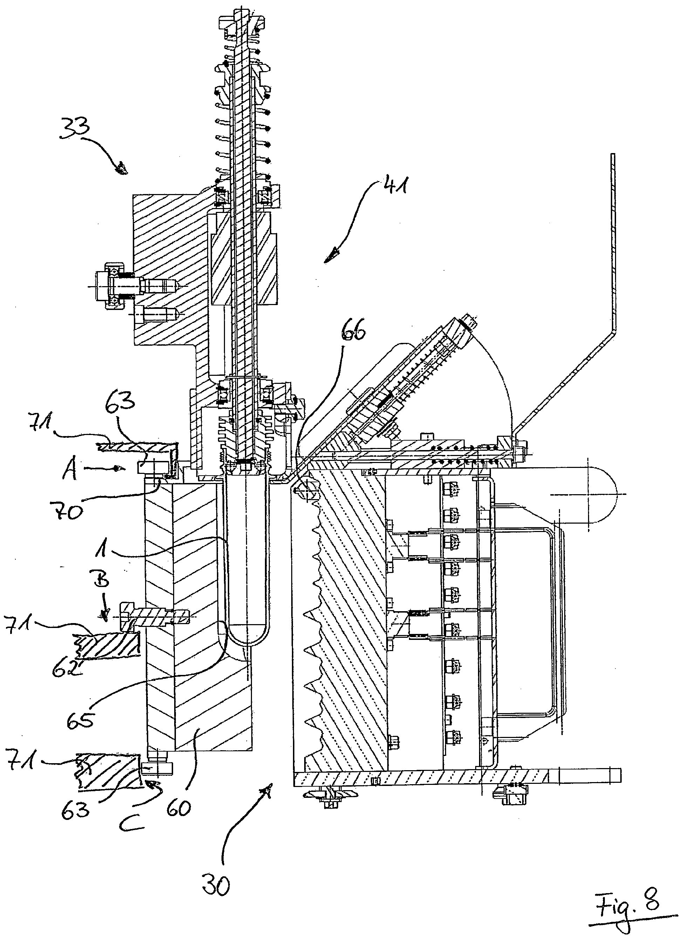

Fig. 8 zeigt einen Schnitt im Bereich der Heizstrahler (30) durch einen solchen mitlaufenden Gegenreflektor (60). In diesem Bereich der Heizstrahler (30) ist der Gegenreflektor (60) bewegungsgekoppelt an das Transportelement (33) bzw. an die Haltevorrichtung (41) angekoppelt, die z. B. in der zu den Fig. 5 und 6 erläuterten Weise ausgebildet sein kann. Zu der Heizeinrichtung (30) ist lediglich ein Heizelement (66) gezeigt, wobei in der Regel mehrere Heizelemente in lotrechter Richtung übereinanderliegend angeordnet sind. Diese weiteren Heizelement wären also unterhalb des dargestellten Heizelementes (66) über die Höhenerstreckung des Vorformlinges (1) verteilt angeordnet.

In Fig. 8 ist erkennbar, dass der mitlaufende Gegenreflektor (60) vorformlingszugewandt eine formangepasste Innenkontur (65) aufweist, um den Vorformling (1) möglichst äquidistant über dessen reflektorzugewandten Teilumfangsbereich in geringer Entfernung zu umgeben. Auf diese Weise kann die vom Heizelement (66) emittierte Heizstrahlung effektiv reflektiert und auf den Vorformling (1) zurückgeworfen werden. Da der mitlaufende Gegenreflektor (60) wie z.B. aus Fig. 7 ersichtlich in den Umlenkbereichen der Kettenbahn (301) von dem Transportelement (33) weggeführt wird, besteht dennoch freier Zugang des Vorformlinges (1) zu bzw. von dem Transportelement (33) weg, wie er für typische Aufsteck- und Abnehmvorgänge benötigt wird, z.B. im Zusammenspiel mit im Stand der Technik bekannten Greifzangen oder Übergaberädern. Insbesondere kann eine Höhenbewegung des Transportelementes (33) ausgeführt werden, ohne mit dem Gegenreflektor (60) zu kollidieren.

Figur 8 zeigt weiterhin, dass sich das Koppelelement (70) in Vorformlingsrichtung bis hin zum unteren Ende des Transportelementes (33) erstreckt und durch Anlage an der blickabgewandten Seite des Transportelementes (33) bei dessen Bewegung mitgenommen wird. Bei Vergrößerung des Abstandes zwischen dem Gegenreflektor (60) und dem Transportelement (33), z.B. bei entsprechendem Verlauf der Laufschiene (71) relativ zur Kettenbahn (301), gelangt das Koppelelement außer Eingriff mit dem Transportelement(33). Dies erfolgt z.B. außerhalb oder zum Ende der Heizstrecke (24).

Bezugnehmend auf Fig. 3 ist strichpunktiert ein möglicher Verlauf der Reflektorbahn (61) eingezeichnet. Es ist erkennbar, dass insbesondere im einlauf- bzw. auslaufseitigen Bereich der umlaufenden Kette die Reflektorbahn (61) signifikant vom Verlauf der Kettenbahn (301) abweicht. Die Zahl der Kettenglieder der umlaufenden Kette ist dadurch erheblich größer als die Zahl der umlaufenden Gegenreflektoren (60). In diesem Bereich ist es auch für eine Bedienperson möglich, z.B. die Gegenreflektoren (60) auszutauschen.

Die Gegenreflektoren (60) sind mit Laufrollen (63) bzw. Führungsrollen (62) versehen. Diese Lauf bzw. Führungsrollen (62, 63) sind in Verbindung mit der Konturierung der Laufschiene so gewählt, dass eine reibungsarme Verschiebung der Gegenreflektoren (60) möglich ist und gleichzeitig eine einfaches Aus- und Einhängen der Gegenreflektoren (60). Entsprechende Laufschienensysteme und entsprechende Laufrollen sind im Stand der Technik für viele Anwendungen bekannt, so dass auf eine detaillierte Darstellung an dieser Stelle verzichtet werden kann.

In Fig. 8 sind lediglich die Abstützbereiche einer Laufschiene (71) dargestellt mit drei Abstützpunkten A, B, und C, an denen eine Abstützung des Gegenreflektors (60) in vertikaler Richtung (Abstützpunkt B) und in horizontaler Richtung (Abstützpunkte A und C) erfolgt. Durch eine Kipp- und Zugbewegung um Abstützpunkt B kann der Gegenreflektor (60) in die bzw. aus der Laufschiene (71) ein- und ausgehängt werden.

## Patentansprüche

1. Verfahren zur Temperaturkonditionierung von aus einem thermoplastischen Material bestehenden Vorformlingen (1) auf eine für eine Blasumformung geeignete Temperatur und Temperaturverteilung in einer Aufheizvorrichtung (300) mit mehreren Heizeinrichtungen (30), wobei die Aufheizvorrichtung (300) mehrere Transport- und Handhabungsmittel (33, 41) für den Transport und die Handhabung der Vorformlinge (1) durch die Aufheizvorrichtung (300) entlang eines Transportweges (301) aufweist, wobei die Transport- und Handhabungsmittel (33, 41) kettenartig verbunden und auf einer umlaufenden Kettenbahn (301) geführt sind, wobei entlang einer Heizstrecke (24), die Teil dieses Transportweges (301) ist, die mehreren Heizeinrichtungen (30) in Transportrichtung hintereinanderliegend stationär angeordnet und wobei auf wenigstens einer den Heizeinrichtungen (30) gegenüberliegenden Seite Gegenreflektoren (60) vorgesehen sind, die im Bereich der Heizeinrichtungen (30) mit diesen zusammen einen tunnelartigen Heizbereich ausbilden, durch den hindurch die Vorformlinge (1) zum Zwecke der Aufheizung transportiert werden, wobei wenigstens im Bereich der Heizstrecke (24) jedem Vorformling (1) bzw. jedem Transport- und Handhabungsmittel (33, 41) ein mitlaufender Gegenreflektor (60) zugeordnet wird, der mit dem Vorformling (1) mitlaufend durch die Heizstrecke (24) hindurch bewegt wird, **dadurch gekennzeichnet, dass** die Gegenreflektoren (60) auf einer von der Kettenbahn (301) getrennt umlaufenden Reflektorbahn (61) geführt werden, die im Bereich der Heizstrecke (24) parallel und in einem ersten Abstand zur Kettenbahn (301) verläuft und die insbesondere in wenigstens einem Bereich außerhalb der Heizstrecke (24) einen von der Kettenbahn (301) abweichenden Bahnverlauf nimmt, insbesondere in diesem Bereich mit abweichendem Verlauf in einem zweiten, gegenüber dem ersten Abstand größeren Abstand von der Kettenbahn (301) verläuft.

2. Verfahren nach Anspruch 1, **dadurch gekennzeichnet, dass** für das gemeinsame Durchlaufen der Heizstrecke (24) eine lösbare Bewegungskopplung zwischen einem Gegenreflektor (60) und einem Vorformling (1) erfolgt, wobei die Bewegungskopplung spätestens in einem Bereich außerhalb der Heizstrecke (24) wieder aufgehoben wird, sodass der Vorformling (1) und der Gegenreflektor (60) zumindest auf einem Teilweg außerhalb der Heizstrecke (24) bewegungsentkoppelt geführt werden.

3. Verfahren nach Anspruch 2, **dadurch gekennzeichnet, dass** die Kopplung an das den Vorformling (1) tragende Transport- und Handhabungsmittel (33, 41) erfolgt.

4. Verfahren nach einem der vorhergehenden Ansprüche, **dadurch gekennzeichnet, dass** die Gegenreflektoren (60) auf einer Reflektorbahn (61) geführt werden, die kürzer als die Kettenbahn (301) ausgebildet und die Anzahl der umlaufenden Gegenreflektoren (60) geringer als die Anzahl der umlaufenden Transport- und Handhabungsmittel (33, 41) ist.

5. Verfahren nach einem der vorhergehenden Ansprüche, **dadurch gekennzeichnet, dass** benachbart zueinander angeordnete Gegenreflektoren (60) nicht aneinander gekoppelt sind, wobei die Gegenreflektoren (60) insbesondere in so dichter Anordnung auf der Reflektorbahn (61) angeordnet und geführt sind, dass sie mit geringem Spiel aneinander angrenzen.

6. Verfahren nach einem der vorhergehenden Ansprüche, **dadurch gekennzeichnet, dass** die Reflektorbahn (61) als Führungsschiene ausgebildet ist, in die die Gegenreflektoren (60) ein- und ausgehängt werden können, wobei die Gegenreflektoren (60) insbesondere Laufrollen (62, 63) zum Abrollen auf der Führungsschiene aufweisen.

7. Aufheizvorrichtung (300) mit mehreren Heizeinrichtungen (30) zur Temperaturkonditionierung von aus einem thermoplastischen Material bestehenden Vorformlingen (1) auf eine für eine Blasumformung geeignete Temperatur und Temperaturverteilung, wobei die Aufheizvorrichtung (300) mehrere Transport- und Handhabungsmittel (33, 41) für den Transport und die Handhabung der Vorformlinge (1) durch die Aufheizvorrichtung (300) entlang eines Transportweges (301) aufweist, wobei die Transport- und Handhabungsmittel (33, 41) kettenartig verbunden und auf einer umlaufenden Kettenbahn (301) geführt sind, wobei entlang einer Heizstrecke (24), die Teil dieses Transportweges (301) ist, die mehreren Heizeinrichtungen (30) in Transportrichtung hintereinanderliegend stationär angeordnet und wobei auf wenigstens einer den Heizeinrichtungen (30) gegenüberliegenden Seite Gegenreflektoren (60) vorgesehen sind, die im Bereich der Heizeinrichtungen (30) mit diesen zusammen einen tunnelartigen Heizbereich ausbilden, durch den hindurch die Vorformlinge (1) zum Zwecke der Aufheizung transportiert werden, wobei wenigstens im Bereich der Heizstrecke (24) jedem Vorformling (1) bzw. jedem Transport- und Handhabungsmittel (33, 41) ein mitlaufender Gegenreflektor (60) zugeordnet ist, der mit dem Vorformling (1) durch die Heizstrecke (24) mitlaufend ausgeführt ist, **dadurch gekennzeichnet, dass** die Gegenreflektoren (60) auf einer von der Kettenbahn (301) getrennt angeordneten umlaufenden Reflektorbahn (61) geführt sind, wobei die Reflektorbahn (61) im Bereich der Heizstrecke (24) parallel und in einem ersten Abstand zur Kettenbahn (301) verlaufend ausgeführt ist, und wobei sie insbesondere in wenigstens einem Bereich außerhalb der Heizstrecke (24) einen von der Kettenbahn (301) abweichenden Bahnverlauf nehmend ausgebildet ist, wobei sie insbesondere in diesem Bereich mit abweichendem Verlauf in einem zweiten, gegenüber dem ersten Abstand größeren Abstand von der Kettenbahn (301) verlaufend ausgebildet ist.

8. Vorrichtung nach Anspruch 7, **dadurch gekennzeichnet, dass** die Gegenreflektoren (60) Koppelelemente (70) aufweisen, die mit korrespondierenden Koppelelementen der Transport- und Handhabungsmittel (33, 41) derart in Eingriff und außer Eingriff bringbar sind, dass für das gemeinsame Durchlaufen der Heizstrecke (24) eine lösbare Bewegungskopplung zwischen einem Gegenreflektor (60) und einem Vorformling (1) erfolgt, insbesondere durch Kopplung an das den Vorformling (1) tragende Transport- und Handhabungsmittel (33, 41), wobei die Kopplung spätestens in einem Bereich außerhalb der Heizstrecke (24) wieder aufgehoben wird, sodass der Vorformling (1) und der Gegenreflektor (60) zumindest auf einem Teilweg außerhalb der Heizstrecke (24) bewegungsentkoppelt geführt sind.

9. Vorrichtung nach Anspruch 7 oder 8, **dadurch gekennzeichnet, dass** die Reflektorbahn (61) als Laufschiene ausgebildet ist und die Gegenreflektoren (60) mit Laufrollen (62, 63) auf der Laufschiene geführt sind.

10. Vorrichtung nach einem der Ansprüche 7 bis 9, **dadurch gekennzeichnet, dass** die Reflektorbahn (61) eine geringere Länge als die Kettenbahn (301) aufweist und insbesondere in den Bereichen der Umlenkräder (34, 36) der Kettenbahn (301) innenseitig der Kettenbahn (301) verläuft.

11. Vorrichtung nach einem der Ansprüche 7 bis 10, **dadurch gekennzeichnet, dass** die Gegenreflektoren (60) den zugeordneten Vorformlingen (1) formangepasste reflektierende Innenkonturen (65) aufweisen.

12. Blasformungsmaschine (100) mit Blasstationen (3) zur Blasumformung von Vorformlingen (1) in Behälter (2), **gekennzeichnet durch** eine Aufheizvorrichtung (300) nach einem der Ansprüche 7 bis 11.

## Claims

1. A method for temperature conditioning of preforms (1) consisting of thermoplastic material to a temperature suitable for blow moulding and for temperature distribution in a heating device (300) with a plurality of heaters (30), wherein the heating device (300) has a plurality of transporting and handling means (33, 41) for transporting and handling the preforms (1) by the heating device (300) along a transport path (301), wherein the transporting and handling means (33, 41) are connected in a chainlike manner and guided on a rotary chain way (301), wherein the plurality of heaters (30) are arranged along a heating section (24) in a stationary manner and in succession as viewed in transport direction, said heating section (24) forming part of this transport path (301), and wherein counterreflectors (60) are provided on at least a side opposite to the heaters (30), wherein, along with the heaters (30), said counterreflectors (60) form a tunnellike heating region in the area of the heaters (30), said preforms (1) being transported through said tunnellike heating region for the purpose of being heated, wherein, at least in the area of the heating section (24), a concurrent counterreflector (60) is allocated to each preform (1) or each transporting and handling means (33, 41), respectively, said counterreflector (60) being moved through the heating section (24) along with the preform (1),
**characterised in that**
- the counterreflectors (60) are guided on a reflector way (61) that is rotating separately from the chain way (301) and extends parallel to and spaced apart from the chain way (301) by a first distance in the area of the heating section (24), said reflector way (61) extending along a path that is different from the chain way (301) particularly in at least a region outside of the heating section (24) and, particularly in this region, extending along a different path spaced apart from the chain way (301) at a second distance that is in excess of the first distance.

2. The method in accordance with Claim 1, **characterised in that** the movements of a counterreflector (60) and a preform (1) are coupled to each other in a detachable manner to allow said counterreflector (60) and said preform (1) to run through the heating section (24) together, wherein the coupling of movements is cancelled again not later than in a region outside of the heating section (24), with the result that the preform (1) and the counterreflector (60) are guided in decoupled movements at least on a partial path outside of the heating section (24).

3. The method in accordance with Claim 2, **characterised in that** the coupling is made to the transporting and handling means (33, 41) carrying the preform (1).

4. The method in accordance with any one of the preceding claims, **characterised in that** the counterreflectors (60) are guided on a reflector way (61) that is shorter than the chain way (301) and that the number of rotating counterreflectors (60) is lower than the number of the rotating transporting and handling means (33, 41).

5. The method in accordance with any one of the preceding claims, **characterised in that** counterreflectors (60) that are arranged adjacent to each other are not coupled to each other, wherein the counterreflectors (60) are, in particular, arranged and guided on the reflector way (61) in such a tight arrangement that they are adjacent to each other with small play.

6. The method in accordance with any one of the preceding claims, **characterised in that** the reflector way (61) is configured as a guiding rail, wherein the counterreflectors (60) can be put into and out of said guiding rail and wherein the counterreflectors (60), in particular, have rollers (62, 63) to roll on the guiding rail.

7. A heating device (300) with a plurality of heaters (30) for temperature conditioning of preforms (1) consisting of thermoplastic material to a temperature suitable for blow moulding and for temperature distribution, wherein the heating device (300) has a plurality of transporting and handling means (33, 41) for transporting and handling the preforms (1) by the heating device (300) along a transport path (301), wherein the transporting and handling means (33, 41) are connected in a chainlike manner and guided on a rotary chain way (301), wherein the plurality of heaters (30) are arranged along a heating section (24) in a stationary manner and in succession as viewed in transport direction, said heating section (24) forming part of this transport path (301), and wherein counterreflectors (60) are provided on at least a side opposite to the heaters (30), wherein, along with the heaters (30), said counterreflectors (60) form a tunnellike heating region in the area of the heaters (30), said preforms (1) being transported through said tunnellike heating region for the purpose of being heated, wherein, at least in the area of the heating section (24), a concurrent counterreflector (60) is allocated to each preform (1) or each transporting and handling means (33, 41), respectively, said counterreflector (60) being configured such that it moves through the heating section (24) along with the preform (1), **characterised in that** the counterreflectors (60) are guided on a reflector way (61) that is rotating separately from the chain way (301), wherein the reflector way (61) extends parallel to and spaced apart from the chain way (301) by a first distance in the area of the heating section (24) and wherein it is designed such that it extends along a path that is different from the chain way (301) particularly in at least a region outside of the heating section (24), wherein, particularly in this region, it is designed such that it extends along a different path spaced apart from the chain way (301) at a second distance that is in excess of the first distance.

8. The device in accordance with Claim 7, **characterised in that** the counterreflectors (60) have coupling elements (70) which can be brought into and out of engagement with corresponding coupling elements of the transporting and handling means (33, 41) in such a manner that, to allow a counterreflector (60) and a preform (1) to run through the heating section (24) together, the movements of said counterreflector (60) and said preform (1) are coupled to each other in a detachable manner, particularly by being coupled to the transporting and handling means (33, 41) carrying the preform (1), wherein the coupling is cancelled again not later than in a region outside of the heating section (24), with the result that the preform (1) and the counterreflector (60) are guided in decoupled movements at least on a partial path outside of the heating section (24).

9. The device in accordance with Claim 7 or 8, **characterised in that** the reflector way (61) is configured as a guide rail and that the counterreflectors (60) are guided on the guide rail by mans of rollers (62, 63).

10. The device in accordance with any one of Claims 7 to 9, **characterised in that** the reflector way (61) has a shorter length than the chain way (301) and extends on the inside of the chain way (301) particularly in the areas of the deflexion pulleys (34, 36) of the chain way (301).

11. The device in accordance with any one of Claims 7 to 10, **characterised in that** the counterreflectors (60) have reflecting inner contours (65) that are adapted to the shape of the allocated preforms (1).

12. A blow moulding machine (100) having blowing stations (3) for the blow moulding of preforms (1) to obtain containers (2), **characterised by** a heating device (300) in accordance with any one of Claims 7 to 11.

## Revendications

1. Procédé de conditionnement thermique de préformes (1) en un matériau thermoplastique les amenant à une température et une distribution de températures appropriées au moulage par soufflage dans un dispositif d'échauffement (300) avec plusieurs dispositifs chauffage (30), le dispositif d'échauffement (300) présentant plusieurs moyens de transport et de manipulation (33, 41) pour le transport et la manipulation des préformes (1) dans le dispositif d'échauffement (300) le long d'un parcours (301), les moyens de transport et de manipulation (33, 41) étant reliés pour former un enchaînement et guidés sur un transporteur à chaîne (301) en rotation, les dispositifs de chauffage (30) étant agencés de façon stationnaire l'un derrière l'autre dans le sens du transport le long d'une section de chauffage (24) qui fait partie de ce parcours (301) et des contre-réflecteurs (60) étant prévus sur au moins un côté opposé aux dispositifs de chauffage (30), ces contre-réflecteurs (60) formant avec les dispositifs de chauffage (30) une zone de chauffage de type tunnel à travers lequel les préformes (1) sont transportées pour être réchauffées, un contre-réflecteur (60) étant, au moins au niveau de la section de chauffage (24), adjoint à chaque préforme (1) ou à chaque moyen de transport et de manipulation (33, 41), ce contre-réflecteur (60) se déplaçant avec la préforme (1) pour traverser la section de chauffage (24), **caractérisé en ce que** les contre-réflecteurs (60) sont entraînés le long d'un circuit de réflecteurs (61) en rotation indépendante du transporteur à chaîne (301) et, dans la section de chauffage (24), selon un tracé parallèle au parcours du transporteur à chaîne (301) et à une première distance de celui-ci et, notamment dans au moins une zone à l'extérieur de la section de chauffage (24), selon un tracé qui s'écarte du parcours du transporteur à chaîne (301) avec, notamment dans cette zone de parcours divergent, un écartement par rapport au transporteur à chaîne (301) supérieur à la première distance.

2. Procédé selon la revendication 1, **caractérisé en ce qu'**un couplage cinématique amovible entre un contre-réflecteur (60) et une préforme (1) est réalisé pour le parcours conjoint de la section de chauffage (24), ce couplage cinématique étant à nouveau défait au plus tard dans une zone extérieure à la section de chauffage (24) de sorte que le déplacement de la préforme (1) et du contre-réflecteur (60) sont découplés sur au moins une partie de leur parcours à l'extérieur de la section de chauffage (24).

3. Procédé selon la revendication 2, **caractérisé en ce que** le couplage est réalisé avec le moyen de transport et de manipulation (33, 41) qui porte la préforme (1).

4. Procédé selon l'une des revendications précédentes, **caractérisé en ce que** les contre-réflecteurs (60) sont conduits selon un circuit de réflecteurs (61) qui est plus court que le transporteur à chaîne (301), et que le nombre de contre-réflecteurs (60) circulant est inférieur au nombre de moyens de transport et de manipulation (33, 41) circulant.

5. Procédé selon l'une des revendications précédentes, **caractérisé en ce que** des contre-réflecteurs (60) adjacents ne sont pas couplés l'un à l'autre, les contre-réflecteurs (60) étant notamment disposés et conduits sur le circuit de réflecteurs (61) selon un agencement si serré que leur contiguïté ne présente qu'un faible jeu.

6. Procédé selon l'une des revendications précédentes, **caractérisé en ce que** le circuit de réflecteurs (61) est réalisé sous forme de glissière de guidage dans laquelle les contre-réflecteurs (60) peuvent être accrochés ou décrochés, les contre-réflecteurs (60) présentant notamment des galets de roulement (62, 63) pour le roulement sur la glissière de guidage.

7. Dispositif d'échauffement (300) avec plusieurs dispositifs de chauffage (30) pour le conditionnement thermique de préformes (1) en un matériau thermoplastique les amenant à une température et une distribution de températures appropriées au moulage par soufflage, le dispositif d'échauffement (300) présentant plusieurs moyens de transport et de manipulation (33, 41) pour le transport et la manipulation des préformes (1) dans le dispositif d'échauffement (300) le long d'un parcours (301), les moyens de transport et de manipulation (33, 41) étant reliés pour former un enchaînement et guidés sur un transporteur à chaîne (301) en rotation, les dispositifs de chauffage (30) étant agencés de façon stationnaire l'un derrière l'autre dans le sens du transport le long d'une section de chauffage (24) qui fait partie de ce parcours (301) et des contre-réflecteurs (60) étant prévus sur au moins un côté opposé aux dispositifs de chauffage (30), ces contre-réflecteurs (60) formant avec les dispositifs de chauffage (30) une zone de chauffage de type tunnel à travers lequel les préformes (1) sont transportées pour être réchauffées, un contre-réflecteur (60) étant, au moins au niveau de la section de chauffage (24), adjoint à chaque préforme (1) ou à chaque moyen de transport et de manipulation (33, 41), ce contre-réflecteur (60) étant réalisé de façon à se déplacer avec la préforme (1) à travers la section de chauffage (24), **caractérisé en ce que** les contre-réflecteurs (60) sont entraînés le long d'un circuit de réflecteurs (61) en rotation séparé du transporteur à chaîne (301), le tracé du circuit de réflecteurs (61) étant, dans la section de chauffage (24), parallèle au parcours du transporteur à chaîne (301) et situé à une première distance de celui-ci puis, notamment dans au moins une zone à l'extérieur de la section de chauffage (24), réalisé de façon à s'écarter du parcours du transporteur à chaîne (301) avec, notamment dans cette zone de parcours divergent, un écartement par rapport au transporteur à chaîne (301) supérieur à la première distance.

8. Dispositif selon la revendication 7, **caractérisé en ce que** les contre-réflecteurs (60) présentent des éléments de couplage (70) qui peuvent être mis en ou hors prise avec des éléments de couplage correspondants des moyens de transport et de manipulation (33, 41) de façon à obtenir pour la traversée conjointe de la section de chauffage (24) un couplage cinématique amovible entre un contre-réflecteur (60) et une préforme (1), notamment par accouplement au moyen de transport et de manipulation (33, 41) qui porte la préforme (1), l'accouplement pouvant à nouveau être découplé au plus tard dans une zone extérieure à la section de chauffage (24) de sorte que le déplacement de la préforme (1) et celui du contre-réflecteur (60) soient découplés sur au moins une partie de leur parcours à l'extérieur de la section de chauffage (24).

9. Dispositif selon la revendication 7 ou 8, **caractérisé en ce que** le circuit de réflecteurs (61) est réalisé sous forme de rail de roulement et que les contre-réflecteurs (60) sont guidés par des galets de roulement (62, 63) sur le rail de roulement.

10. Dispositif selon l'une des revendications 7 à 9, **caractérisé en ce que** le circuit de réflecteurs (61) a une longueur inférieure à celle du transporteur à chaîne (301) et, notamment au niveau des roues de renvoi (34, 36) du transporteur à chaîne (301), suit un tracé intérieur à celui du transporteur à chaîne (301).

11. Dispositif selon l'une des revendications 7 à 10, **caractérisé en ce que** les contre-réflecteurs (60) présentent des contours intérieurs (65) réfléchissants adaptés à la forme des préformes (1) auxquelles ils sont affectés.

12. Machine de moulage par soufflage (100) avec des stations de soufflage (3) pour la transformation par soufflage de préformes (1) en récipients (2), **caractérisée par** un dispositif d'échauffement (300) selon l'une des revendications 7 à 11.
